# EUROPEAN PATENT APPLICATION

(11) **EP 1 291 760 A1**
(43) Date of publication of application: **12.03.2003**
(21) Application number: 02255925.6
(22) Date of filing: 27.08.2002
(51) Int. Cl.: G06F 3/12, H04N 1/00, H04N 1/32

(54) **System and method for regulating print requests sent to a publisher**

(30) Priority: 04.09.2001 US 946428
(71) Applicant: Hewlett-Packard Company, Palo Alto, CA 94304 (US)
(72) Inventor: Hill, Chris T., Camas, Washington 98607 (US)
(74) Representative: Jackson, Richard Eric

(57) **Abstract**

A system (10) and method (100) for regulating print jobs sent to a publisher (16). Typically, the method (100) includes receiving (106) a print request that a print job be sent to a publisher (16). The print job may have a print job attribute. The method (100) further includes comparing (110) the print job attribute to a pre-authorized attribute limit. The print request is directed to a destination determined by results from comparing the print job attribute with the pre-authorized attribute limit.

## Description

### Technical Field

The present invention relates generally to printers, and more particularly, to a system and method for regulating print jobs sent to a publisher.

### Background

Computer users today are able to generate sophisticated documents that require high-end printers to print hard copies of the documents in a timely fashion. One option for printing such a sophisticated document is to save the document on a disk or other portable storage medium and send the saved copy to a commercial print shop. The print shop may be networked with the user's computer such that a user can access and send a print job from the user's local computer to the print shop.

The cost of having a print job printed by a commercial print shop may be high. Hence, it may be advantageous to regulate which computer users in an office environment have access to the networked print shop. One way of regulating a user's access to the print shop is to require that each user's request be sent to the user's supervisor, who then must approve the request prior to the request being sent to the print shop. However, approving each individual print job may be cumbersome and time-consuming, and thus, needlessly increases the internal costs of submitting authorized print jobs to a print shop.

### Summary

Briefly, the invention includes a computer-implemented system and method for regulating print jobs sent to a publisher. Typically, the method includes receiving a print request from a user that a print job be sent to a publisher. The print job may have a print job attribute. The method further includes comparing the print job attribute to a pre-authorized attribute limit. The print request is directed to a destination determined by results from comparing the print job attribute with the pre-authorized attribute limit. Thus, when the print job attribute is within the pre-authorized attribute limit, the print request may be automatically submitted to the publisher. Alternatively, when the print job attribute exceeds the pre-authorized attribute limit, the print request may be sent to a supervisor for approval.

### Description of the Figures

Fig. 1 is a networked computer system in which one embodiment of the present invention may be implemented.
Fig. 2 depicts a flowchart of a method for regulating print jobs sent to a publisher according to one embodiment of the present invention.

### Detailed Description

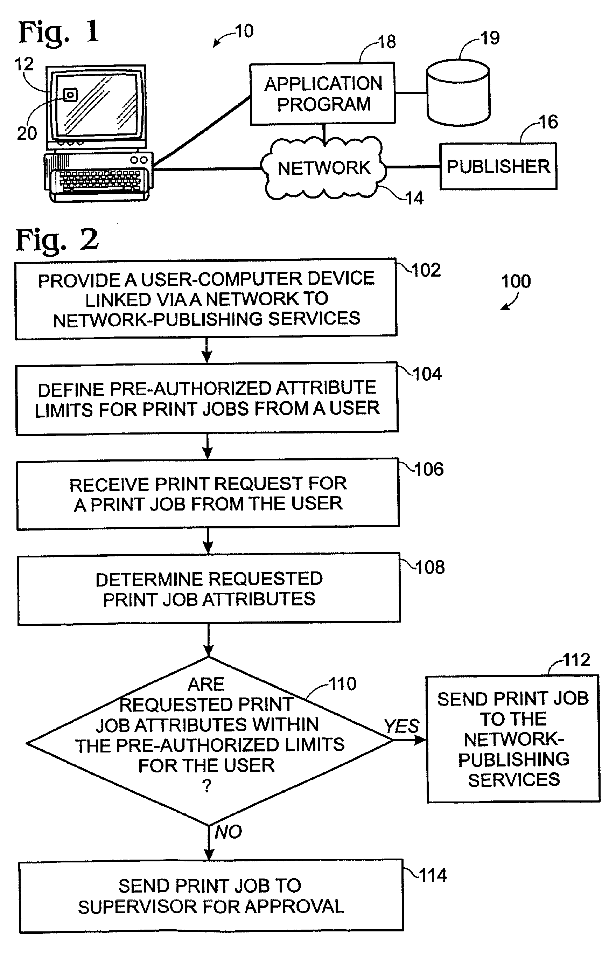

Referring initially to Fig. 1, a system for regulating user submission of print jobs to a publisher is shown generally at 10. System 10 typically includes a computer 12 linked via a network 14 to a publisher 16. System 10 is configured to regulate usage of publishing resources by providing an application program 18, which identifies and forwards authorized print jobs from a particular user via computer 12 to publisher 16.

Computer 12 is typically a personal computer, but may be any other type of suitable computer. For example, computer 12 may be a hand -held computer, a portable computer, a desktop computer, a server, or a mainframe computer. Computer 12 is linked through network 14 such that a user of computer 12 can request a document or file be sent to publisher 16 for printing. Network 14 may be a telecommunications link, such as a local area network (LAN) or a wide area network (WAN). The WAN may include a public network, such as the Internet, or a private network.

Publisher 16 may be linked via telecommunications link or network 14 to computer 12 and is configured to accept a print request from computer 12. Publisher 16 may be a remote commercial print shop. Alternatively, publisher 16 may be an in-house print shop. Publisher 16 includes high-end printers and finishing services, which may not be available on printers designed for general home and office use.

As shown in Fig. 1, computer 12 typically employs an associated application program 18. Application program 18 may reside on computer 12 or alternatively, application program 18 may reside on another device within network 14. For example, application program 18 may reside on a network server or other networked computer.

Application program 18 may utilize a database 19 having pre-authorized limits or attributes for at least one user. A supervisor or system administrator may assign a user a pre-authorized limit and store the limit in database 19. This database with pra-authorized limits may reside in memory on any networked computer or networked storage device. The pre-authorized limits may include limits, such as limits on the number of copies, the number of pages, the maximum cost, or other suitable limits. The limits may be customized to individual users or correspond more generally to a group of users. For example, all employees in the marketing department may have one set of limits, while those in the sales department may have a different set of limits.

Application program 18 also typically includes a user-selectable print interface displayed on a screen of computer 12. A user may submit a document or file to be printed by publisher 16 by submitting the print job to application program 18 via the print interface. For example, the user print interface may include a print out-source icon 20 on the desktop screen representing the publisher on computer 12. A user submitting a print request for a print job may drag and drop a file to be sent to publisher 16 on the corresponding print out-source icon.

Regardless of the form of the user interface, a user of computer 12 may submit a print request for a print job to be printed by publisher 16. The submitted print job typically includes a set of attributes. The set of attributes may include user-defined attributes for the print job or inherent attributes. These user-defined attributes may be selected through the user print interface discussed above. Although not inclusive, examples of such attributes may include the number of pages to be printed, the number of copies to be printed, the type of media for the print job, color and draft quality, and /or binding and finishing options for the print job. The selected attributes for each print job may affect the overall cost of the print job.

When a user of computer 12 requests a print job to be sent to publisher 16, the request is first filtered through application program 18. The set of attributes, which accompany the print job, may be compared with pre-authorized limits. Each attribute may have a pre-authorized limit such that each requested print job attribute for a print job may be compared directly to a corresponding pre-authorized limit for the particular attribute. Alternatively, the requested print job attributes may be analyzed as a whole relative to a single pre-authorized limit. For example, the total cost of the requested print job may be determined by evaluating the cost of the requested print job attributes for the print job. This total cost for the print job may then be compared directly to a pre-authorized cost limit. If the attributes are within the pre-authorized limit, then the print job may be sent to publisher 16 automatically. However, if the attributes exceed the pre-authorized limit, then the print job may be sent to the user's supervisor for approval before the print job is released to publisher 16.

For example, a user may have a pre-authorized limit on the number of pages permitted. Hence, if a user sends a print request for a print job with 60 pages and the user has a 50-page pre-authorized limit, then the print request will be denied. The print request then may be forwarded to the user's supervisor for approval. The user may also be notified. If the request is approved, the print job may be automatically sent to the publisher. If the request is not approved, the user may be notified. In contrast, if the user sends a print job having 40 pages and the user has a 50-page pre-authorized limit, then the print job will be automatically forwarded to the publisher without additional authorization from the user's supervisor.

As described above, application program 18 serves as a gatekeeper or computerized manager permitting pre-authorized print jobs through to publisher 16, and temporarily delaying requested print jobs that exceed a user's authorization limits. This manager is configured to maintain for a particular user account information specifying allowable publishing job parameters for publishing or print jobs submitted by the particular user to publisher 16. Print jobs that are not automatically forwarded to publisher 16, because they are outside the allowable publishing job parameters may be rerouted through an authorization loop.

Turning now to Fig. 2, a method according to one embodiment of the present invention is shown generally at 100. Method 100 typically includes, at 102, providing a user computer linked via a network to a publisher or publishing service. The publisher service may be a network-publishing service and may include an off-site commercial print shop or an on-site printing facility. At 104, the method further includes defining pre-authorized attribute limits for print jobs sent to the network-publishing services. Typically, the attribute limits are stored within a database on computer 12 or network 14. The attribute limits may vary depending on the user. Alternatively, a group of users may have substantially identical pre-authorized limits.

At 106, the method further includes receiving a print request for a print job from a user. The attributes for the print job are then determined, at 108, and compared to the pre-authorized limits 110. Depending upon the results from comparing the print job attributes with the pre-authorized limits, the print job is sent to a printing endpoint or an evaluation endpoint. Where, as shown at 112, the requested print job is within the pre-authorized limits, the print job is sent automatically to the desired network-publishing service provider (a printing endpoint). Alternatively, at 114, if the requested print job exceeds the pre-authorized limits, then the print job is sent to a supervisor (an evaluation endpoint). The supervisor thus may authorize the requested print job or refuse authorization. The print job, if approved by the supervisor, may then be sent directly to the appropriate network-publishing services.

The system and method described above decrease managerial over-site, and decrease the internal costs of requesting high-end print jobs. Moreover, the system prevents accidental and costly print jobs from being sent to an outside source. For example, if a user accidentally requests 100 copies of a large document (costing $75.00) instead of 10 copies (costing $7.50) and the user has a pre-authorized limit of $50,00 for requested print jobs, then the accidental request for 100 copies will be delayed and sent to a supervisor for authorization. A supervisor may then realize the mistake and prevent an incorrect request from being sent to an outside publisher. Hence, by double-checking print jobs, which exceed pre-authorized limits, costly printing request errors may be caught prior to a print job being printed.

While the present invention has been particularly shown and described with reference to the foregoing preferred embodiments, those skilled in the art will understand that many variations may be made therein without departing from the spirit and scope of the invention as defined in the following claims. The description of the invention should be understood to include all novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application. Where the claims recite "a" or "a first" element or the equivalent thereof, such claims should be understood to include incorporation of one or more such elements, neither requiring nor excluding two or more such elements.

## Claims

1. A computer-implemented method (100) for regulating print jobs sent by a user to a publisher (16), the method (100) comprising: receiving (106) a print request that a print job be sent to a publisher, the print job having a print job attribute; comparing (110) the print job attribute to a pre-authorized attribute limit; directing the print request to a destination determined by results from comparing the print job attribute with the pre-authorized attribute limit.

2. The method (100) of claim 1, where directing the print request to a destination includes submitting (112) the print request automatically to the publisher when the print job attribute is within the pre-authorized attribute limit.

3. The method (100) of claim 1, where directing the print request to a destination includes sending (114) the print request to a supervisor for approval when the print job attribute exceeds the pre-authorized attribute limit.

4. A storage medium readable by a computer (12), having embodied therein a program of instructions (18) executable by the computer (12) to perform the steps of: receiving (106) a print request from a user that a print job be sent to a publisher, the print job having a print job attribute; comparing (110) the print job attribute to a pre-authorized attribute limit; submitting (112) the print request automatically to the publisher when the print job attribute is within the pre-authorized attribute limit.

5. The storage medium of claim 4, where the program of instructions (18) exectuable by the computer (12) includes instructions for sending (114) the print request to a supervisor for approval when the print job attribute exceeds the pre-authorized attribute limit.

6. A computer-implemented system (10) for regulating print jobs sent to a publisher (16) by a user, the system (10) comprising: a computer (12) linked to a network (14) configured to receive a print request from the user to send a print job to a publisher (16), wherein the print request includes a print job having a printable file and attributes; a computerized manager (18) operatively configured with the computer (12), the manager (18) being configured to compare (110) a pre-authorized limit with the attributes of the print job and further being configured to temporarily restrict submission of a print job to the publisher (16) when the attributes of the print job exceed the pre-authorized limit.

7. The system (10) of claim 6, where the manager (18) is further configured to send (114) the print request to a supervisor for approval when the attributes of the print job exceed the pre-authorized limit.

8. The system (10) of claim 6, where the manager (18) is further configured to automatically submit (112) the print job to the publisher (16) when the attributes of the print job are within the pre-authorized limit.

9. The system (10) of claim 8, where the print job is communicated to the publisher (16) via a network.

10. The system (10) of claim 6, where the manager (18) employs a database (19) having at least one pre-authorized limit.
